# FASCICULE DE BREVET EUROPEEN

(11) **EP 1 490 262 B1**
(45) Date de publication et mention de la délivrance du brevet: **24.12.2008**
(21) Numéro de dépôt: 03744840.4
(22) Date de dépôt: 21.03.2003
(51) Int. Cl.: B64C 39/04, B64C 37/02

(54) **PROCÉDÉ D'AMÉLIORATION DES CONDITIONS DE SÛRETÉ DANS LE TRANSPORT AÉRIEN**
VERFAHREN ZUR VERBESSERUNG DER SICHERHEIT IM LUFTFAHRTRANSPORT
METHOD TO INCREASE THE SAFETY IN AIR TRANSPORTATION

(30) Priorité: 22.03.2002 FR 0203641
(43) Date de publication de la demande: 29.12.2004
(73) Titulaire: Sopravia Inc., Outremont, Québec H2V4R3 (CA)
(72) Inventeur: ARMAND, Georges, Outremont, Québec H2V4R3 (CA)
(74) Mandataire: Bérogin, Francis
(86) Numéro de dépôt international: PCT/EP2003/002992
(87) Numéro de publication internationale: WO 2003/080436

(56) Documents cités:
- EP-A- 1 167 183
- WO-A-90/13479
- WO-A-99/52759
- BE-A- 759 331
- CA-A- 1 314 035
- DE-U- 29 713 042
- FR-A- 2 623 468
- US-A- 6 047 923

## Description

L'invention a pour objet un procédé d'amélioration des contitions de sûreté dans le transport aérien, selon lequel on réalise un avion à trois fuselages permettant, en particulier, d'augmenter considérablement la capacité de transport et les possibilités d'utilisation par rapport à un avion de type habituel, sans augmenter sensiblement son encombrement, afin de faciliter ses possibilités d'évolution sur les aéroports.

Un tel type d'avion peut, en outre, être réalisé en plusieurs versions comportant, soit trois fuselages de même section, soit un fuselage central pourvu d'un maître couple plus vaste que les deux fuselages latéraux. En outre, selon le mode d'exploitation et la charge à transporter, la propulsion peut être assurée soit par trois réacteurs montés à la pointe arrière de chaque fuselage, soit par deux réacteurs équipant seulement les fuselages latéraux, il est ainsi possible à partir d'un ou deux fuselages de base, de définir au moins deux véritables familles d'avions à multiples possibilités.

Depuis plusieurs années, les constructeurs aéronautiques et les exploitants sont confrontés aux problèmes de l'augmentation constante du trafic aérien, aussi bien pour le fret que pour le transport de passagers. Pour résoudre ces problèmes, on a essayé, tout d'abord, d'augmenter les capacités d'accueil des aéroports existants mais, dans les pays industrialisés, ceux-ci sont proches de la saturation. II faut donc construire de nouveaux aéroports mais, à moins de s'éloigner exagérément des centres urbains, on ne trouve plus de terrains suffisamment étendus pour permettre la construction d'un aéroport international sans apporter une gêne excessive à l'environnement.

On a donc été amené à augmenter les capacités de transport et, par conséquent, les dimensions des avions.

D'une façon générale, dans l'aviation de ligne, et en particulier pour le transport de passagers, on distingue habituellement, en fonction de leur taille, trois types d'avions, respectivement, des avions de type court-courrier dont le fuselage accepte des rangées de deux à quatre rangées de fauteuils de front, des avions de type moyen courrier qui comportent des rangées de cinq à six fauteuils de front et des avions de type long-courrier ou gros porteurs qui comportent des rangées de sept à dix fauteuils de front. Les mêmes types de fuselages peuvent être aménagés pour le transport de fret.

Cependant, un avion gros porteur risque de ne pas pouvoir être accueilli sur les aéroports existants. En effet, la réglementation internationale limite, l'encombrement d'un avion à un carré de 80 mètres de côté environ et les aéroports capables d'accueillir des avions de très grandes dimensions sont très rares.

Compte tenu des surfaces de terrain nécessaires, les aéroports internationaux sont de plus en plus éloignés des centres urbains et l'on a donc développé une aviation d'affaire et régionale utilisant des avions plus petits capables d'être accueillis sur des petits aéroports placés à proximité de certaines villes. Cependant, il est probable que, dans l'avenir, cette notion de compacité s'étendra, avec une réglementation adaptée, des aéroports provinciaux aux aéroports régionaux et aux très petits aéroports dit STOL Airports.

D'autre part, quel que soit le type d'aéroport, le nombre journalier acceptable de décollages et d'atterrissages reste limité ne serait-ce que par les nécessités du contrôle aéronautique. II apparaît donc qu'il serait nécessaire, pour chaque type d'avion d'augmenter les capacités de transport, aussi bien pour le fret que pour les passagers, tout en limitant les dimensions de l'avion de façon que celles-ci restent compatibles avec les possibilités de l'aéroport.

Par ailleurs, des événements récents ont montré la nécessité absolue d'améliorer la sûreté du transport aérien, notamment en mettant au point de nouvelles procédures de contrôle préalable des personnes transportées et des bagages. Cependant, on ne peut exclure l'embarquement de personnes ou de bagages dangereux et il serait donc utile de construire des avions capables de supporter une explosion, par exemple en soute, sans être nécessairement détruits, comme c'est le cas actuellement.

Enfin, il est indispensable que, dans tous les cas, le poste de pilotage soit à l'abri d'une agression et garde la maîtrise des commandes.

Les problèmes auxquels doit faire face l'industrie aéronautique sont donc très variés.

Or, il est apparu que, de façon surprenante, de tels problèmes, bien que souvent contradictoires, pourraient être résolus simultanément si la capacité de transport de l'avion était répartie en trois fuselages séparés.

Le principe d'un avion de ce type avait été envisagé dans le brevet français n°2 623 468 du même inventeur, qui décrivait succinctement un avion à trois fuselages, respectivement un fuselage central et deux fuselages latéraux reliés entre eux par des voilures fixes et qui montre donc toutes les caractéristiques du préambule de la revendication indépendante 1.

Ayant eu l'idée que ce type d'avion permettrait de résoudre les problèmes qui se posent actuellement dans le transport aérien, l'inventeur a cherché à en améliorer les performances et a découvert qu'il était possible, en modifiant la répartition des surfaces portantes et, notamment, en augmentant la surface de la voilure fixe centrale, d'augmenter sensiblement la capacité de charge tout en conservant une longueur de fuselage et une envergure totale compatibles avec les possibilités des aéroports.

L'invention s'applique donc à un type d'avion comprenant trois fuselages écartés transversalement l'un de l'autre, respectivement un fuselage central et deux fuselages latéraux ayant chacun un empennage arrière et reliés entre eux par au moins deux surfaces portantes positives écartées longitudinalement l'une de l'autre, respectivement une surface avant et une surface centrale, comportant chacune deux voilures fixes s'étendant de part et d'autre du fuselage central entre ce dernier et chaque fuselage latéral, les deux voilures fixes de la surface centrale étant prolongées chacune par une aile externe au-delà de chaque fuselage latéral.

Conformément à l'invention, les deux voilures fixes avant et les deux voilures fixes centrales présentent des bords d'attaque inclinés symétriquement d'un angle de flèche positive d'au moins 40°, et la surface de chaque espace libre compris entre le bord de fuite d'une voilure fixe avant et le bord d'attaque de la voilure centrale qui la suit est du même ordre que la surface couverte par ladite voilure avant.

Une telle disposition permet notamment d'augmenter les effets de fente entre les voilures avant et les voilures centrales et, ainsi, d'améliorer les performances des surfaces portantes, ce qui permet d'en limiter l'envergure.

D'autre part, il en résulte que le nez du fuselage central est décalé en avant des nez des fuselages latéraux, ce décalage pouvant être du même ordre que la distance entre les axes d'un fuselage latéral et du fuselage central.

Cette disposition permet dans certaines versions, d'augmenter la charge marchande dans le fuselage central, par rapport aux fuselages latéraux et d'améliorer la visibilité latérale arrière des pilotes.

Par ailleurs, on augmente ainsi la profondeur des voilures fixes centrales qui peut être, avantageusement, au moins égale à 2,5 fois l'écartement entre les flancs d'un fuselage latéral et du fuselage central. Ceci permet d'accroître encore la charge marchande dans le fuselage central, proportionnellement à l'augmentation des surfaces alaires qui s'y rattachent.

Les voilures fixes centrales forment ainsi une aile en delta tronqué et, du fait de la grande surface de celle-ci et de sa capacité de portance, l'ensemble des voilures fixes centrales et des ailes externes qui les prolongent au-delà de chaque fuselage latéral, présente une envergure totale qui ne dépasse pas le triple de la profondeur des voilures fixes centrales le long du fuselage central, ceci permet de réduire l'espace occupé entre les jetées passagers dans les aérogares et de faciliter des extrapolation du même type d'avion, par exemple en trimoteurs ou en quadrimoteurs.

Dans un mode de réalisation préférentiel, les ailes externes prolongeant les voilures fixes centrales s'étendent chacune transversalement sur une distancie ne dépassant pas le double de la distance entre les flancs de chaque fuselage latéral et du fuselage central, et peuvent être munies, sur leurs extrémités externes et leurs bords de fuite, de moyens d'amélioration de la maniabilité en roulis, afin de compenser la forte inertie des fuselages latéraux.

Pour développer encore les surfaces alaires autour du fuselage central par rapport aux fuselages latéraux, les bords d'attaque des voilures fixes centrales ont, de préférence, un angle de flèche supérieur d'au moins 10° à l'angle de flèche des bords d'attaque des ailes externes. De plus, les bords d'attaque des voilures fixes avant ont un angle de flèche plus grand que les bords d'attaque des voilures fixes centrales, afin de permettre un plus grand allongement du fuselage central à l'avant, et d'amplifier les effets de fente sur les surfaces alaires proches de celui-ci, lesquelles sont ainsi pourvues de profondeurs plus importantes.

D'autre part, les bords de fuite des voilures fixes centrales ont avantageusement un angle de flèche négatif de l'ordre de 15°, ce qui permet, dans le cas où le fuselage central est muni d'un réacteur, de rapprocher les entrées d'air de celui-ci des bords de fuite des voilures fixes centrales.

Selon une autre caractéristique avantageuse, les deux voilures fixes centrales ont chacune une face d'intrados à dièdre sensiblement nul et une face d'extrados en dièdre inverse. De préférence, chaque voilure fixe avant présente une face d'intrados et une face d'extrados en dièdre inverse, la face d'extrados étant sensiblement parallèle à celle de la voilure fixe centrale qui la suit.

Ainsi, les conditions de circulation des filets d'air sont améliorées et la portance augmentée.

Pour équilibrer l'allongement du fuselage central vers l'avant, il est aussi possible de l'allonger proportionnellement vers l'arrière, au-delà des extrémités arrières des deux fuselages latéraux. L'empennage de profondeur arrière comprend alors, avantageusement, deux voilures fixes à flèches négatives en dièdre inverse prolongées chacune, au-delà de chaque dérive latérale, par un empennage de profondeur externe.

Les voilures fixes arrières sont, de préférence, fixées rigidement sur les dérives latérales, à un niveau supérieur à celui des voilures fixes centrales et forment avec celles-ci une voilure rhomboïdale non jointive avec les ailes externes. On obtient ainsi un effet de fente, sans risque d'instabilités aérodynamiques et de vibration aux extrémités.

De préférence, la surface portante arrière a, en plan, une forme en W et comprend deux voilures fixes à flèches négatives en dièdre inverse, prolongées chacune par un empennage de profondeur externe à flèche positive.

Un tel avion peut être muni de trois moyens de propulsion tels que des réacteurs ou turbopropulseurs placés respectivement à l'extrémité arrière de chaque fuselage, ou bien deux réacteurs ou turbopropulseurs seulement, placés respectivement aux extrémités arrières de chaque fuselage latéral. En raison de la grande profondeur des emplantures des voilures fixes centrales, les entrées d'air des réacteurs peuvent être placées à une distance optimale des bords de fuite des ailes externes et des voilures fixes centrales ce qui permet d'améliorer les effets d'aspiration sur les emplantures des deux voilures centrales et des ailes externes et de réduire les traînées d'interactions aérodynamiques avec les trois fuselages, en augmentant la portance sur les zones alaires adjacentes.

Un tel type d'avion présente de multiples possibilités d'aménagement. En particulier, le fuselage central peut être affecté, au moins dans une partie avant, au transport de passagers. Dans ce cas, on aménage, sur chaque flanc du fuselage central, au moins deux ouvertures respectivement une porte devant la voilure fixe avant et une porte au-dessus de l'intervalle entre cette dernière et la voilure fixe centrale, chaque ouverture pouvant être associé à un toboggan d'évacuation dirigé en biais par rapport à l'axe longitudinal et passant devant ou au-dessus de la voilure fixe avant. Si le fuselage central est affecté en totalité au transport de passagers, il est dépourvu de réacteur, les moyens de propulsion étant placés respectivement à la pointe arrière de chaque fuselage latéral. Chaque flanc de fuselage comporte alors au moins une issue de secours placée au-dessus de la voilure fixe centrale et associée à un toboggan dirigé en biais vers l'arrière en passant au-dessus de la voilure fixe centrale et une porte arrière placée au-dessus de l'intervalle entre la voilure fixe centrale et la voilure fixe arrière et pouvant être associé, en issue de secours, à un toboggan dirigé en biais vers l'arrière et passant au-dessous de la voilure fixe arrière.

Un tel type d'avion est également avantageux pour le transport de fret. En particulier, étant donné que le poste d'équipage est placé dans la pointe avant du fuselage central, le nez de chaque fuselage latéral peut s'ouvrir en bloc et former une porte cargo frontale pour le chargement de fret de grande longueur, au moins dans la partie avant du fuselage latéral.

Dans le cas où le fuselage central ne porte pas de réacteur, il peut être muni, avantageusement, d'une ouverture cargo placée sur la partie ventrale de sa pointe évolutive arrière et s'étendant sensiblement jusqu'à mi-hauteur des flancs du fuselage, ladite ouverture étant fermée de façon amovible par au moins un panneau qui est profilé de façon à reconstituer la pointe arrière du fuselage central après mise en place et fixation sur celui-ci.

Avantageusement, la partie supérieure dorsale de l'extrémité arrière du fuselage central est surélevée en forme de renflement, de façon à ménager, au-dessus d'un plancher de chargement du fuselage central, une hauteur suffisante pour l'introduction directe, à son niveau, d'un conteneur ou d'une palette de fret par une ouverture cargo ménagée dans la pointe arrière du fuselage central.

Dans ce cas, les deux voilures fixes arrières sont fixées, de préférence, sur ce renflement du fuselage central.

Ce nouveau type d'avion à trois fuselages séparés peut donc faire l'objet de multiples versions adaptées à différents modes d'exploitation. En outre, il est apparu que certaines versions convenant particulièrement bien à l'utilisation de carburants spéciaux.

Par ailleurs, le fuselage central peut être du même type que les fuselages latéraux, ou bien avoir un maître couple plus important.

Comme on le verra en détail par la suite, l'invention permet donc, à partir d'un ou deux fuselages de base correspondant à une ou deux catégories d'aéroports, de réaliser au moins deux familles d'avions à trois fuselages et deux ou trois moteurs, ayant une capacité de l'ordre du triple de celle du fuselage de base, pour un encombrement restant compatible avec la même catégorie d'aéroport.

Par exemple, on peut réaliser, à partir de l'un des fuselages de base, soit un avion affecté en totalité au transport de passagers, soit un avion mixte. Dans le premier cas, de préférence bimoteur, les trois fuselages ont le même maître couple et le fuselage central peut être allongé, mais ne porte pas de réacteur, afin de permettre l'évacuation des passagers par l'arrière.

En revanche, dans le cas d'un avion mixte, seuls les deux fuselages latéraux sont entièrement pressurisés en vue du transport de passagers. Le fuselage central, affecté au transport de fret seul ou mixte, est alors pressurisé seulement dans sa partie avant comportant éventuellement une cabine passager et le poste d'équipage qui peut être blindé pour être garanti contre une agression éventuelle.

Dans un autre mode de réalisation avantageux, le fuselage central peut avoir une hauteur suffisante pour comporter deux ponts placés à deux niveaux différents et s'étendant sans interruption entre les deux pointes évolutives, respectivement avant et arrière, respectivement, un pont inférieur portant deux soutes cargo avec le poste d'équipage et un pont supérieur de vastes dimensions pour le fret.

Avantageusement, le maître couple du fuselage central peut être suffisant pour laisser, au-dessus du plancher supérieur, un espace de chargement ayant une section transversale correspondant, au moins, au gabarit de transport par chemin de fer ou aux gabarits internationaux de conteneurs. Dans ce cas, le nez du fuselage central est muni, au-dessus du poste de pilotage, d'une porte cargo frontale s'ouvrant vers le haut pour donner accès à l'espace de chargement sur le plancher supérieur.

Du fait qu'il est possible d'augmenter les dimensions du fuselage central, celui-ci peut être affecté, sur au moins une partie de sa longueur, à un réservoir pour carburant de faible densité.

Selon une autre caractéristique avantageuse, l'avion est porté par au moins trois rangées alignées de trains d'atterrissage qui se replient, respectivement, dans la partie inférieure du fuselage central et des deux fuselages latéraux. De préférence, les trains d'atterrissage latéraux prennent appui au niveau des flancs internes des fuselages latéraux de façon à réduire la largeur de roulement et faciliter les manoeuvres à terre.

II est apparu, d'autre part, qu'un tel type d'avion permettrait de mettre en oeuvre des procédures originales pour améliorer considérablement la sûreté dans le transport aérien. En effet, le poste de pilotage placé à l'avant du fuselage central peut être blindé et pressurisé séparément, le fret et les passagers étant répartis entre les trois fuselages en fonction des conditions de contrôle.

Par exemple, on peut placer les passagers les plus sûrs et éventuellement menacés dans le fuselage central et les passagers dont le contrôle est plus difficile ou plus rapide dans les fuselages latéraux, l'accès des passagers dans leur compartiment respectif se faisant par des moyens distincts. Par ailleurs, chaque fuselage peut être muni de moyens de pressurisation distincts commandés individuellement à partir du poste de pilotage.

D'autre part, on peut disposer de deux groupes de gouvernes de profondeur respectivement sur les voilures fixe avant et sur les voilures fixes arrière, de trois gouvernes de direction, respectivement sur les dérives des trois fuselages, ainsi que de deux empennages de profondeur externes, utilisables comme élevons, à l'arrière de chaque fuselage latéral, et des organes d'amélioration de la maniabilité en roulis. Toutes ces gouvernes sont commandées à partir du poste de pilotage au moyen de circuits hydrauliques et électriques distincts. Ainsi, en cas de trouble ou d'agression dans un compartiment passagers placé dans un fuselage latéral ou d'explosion, par exemple dans le fuselage central réservé au fret, l'avion ne risque pas d'être détruit et reste manoeuvrable.

D'autres caractéristiques avantageuses de l'invention apparaîtront dans la description qui va suivre de certains modes de réalisation particuliers, donnés à titre d'exemple et représentés sur les dessins annexés.
La figure 1 est une vue schématique de dessus d'un avion d'une première famille à trois fuselages et deux réacteurs pour le transport de passagers.
La figure 2 est une vue de côté de l'avion de la figure 1.
La figure 3 est une vue de face de l'avion de la figure 1.
La figure 4 montre, en vue de dessus, un avion de transport de passagers, avec ses possibilités d'évacuation.
La figure 5 est une vue de côté du même avion.
La figure 6 est une vue de dessus d'un avion mixte pour le transport de passagers et de fret.
La figure 7 est une vue en coupe selon I, I de la figure 6.
La figure 8 est une vue de face de l'avion de la figure 6.
La figure 9 est une vue de dessus d'un avion gros porteur d'une deuxième famille à trois réacteurs, avec un fuselage central à deux ponts.
La figure 10 est une vue de côté de l'avion de la figure 9.
La figure 11 est une vue de face de l'avion de la figure 9.
La figure 12 est une vue de dessus d'un avion trimoteurs de la deuxième famille avec un fuselage central pour passagers et fret, pourvu d'une section transversale plus vaste que celle des fuselages latéraux.
La figure 13 est une vue de côté de l'avion de la figure 12.
La figure 14 est une vue de face de l'avion de la figure 12.

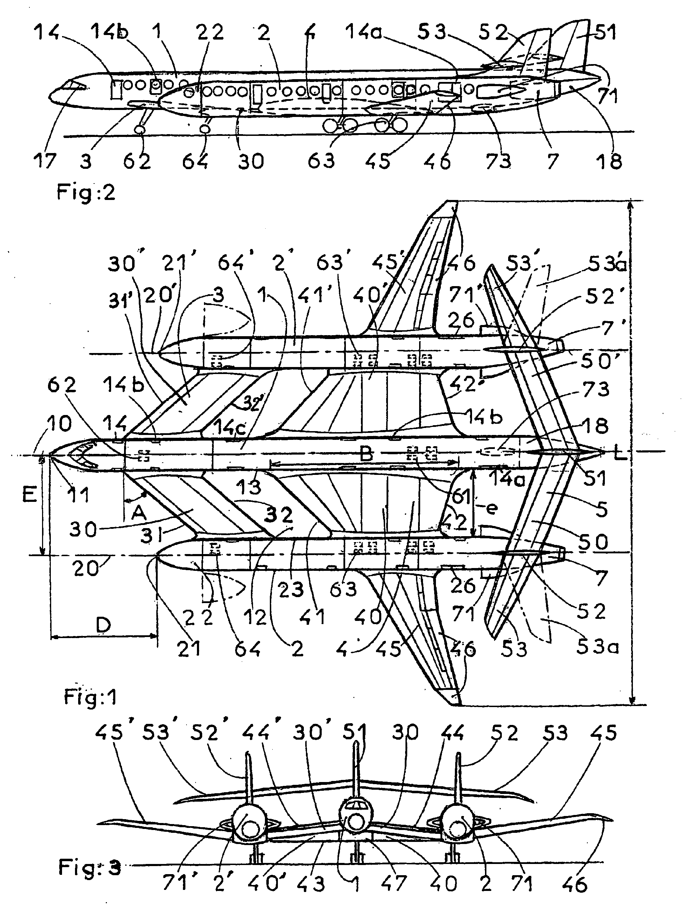

Sur la figure 1, on a représenté un avion bimoteur de la première famille selon l'invention comprenant trois fuselages de même section transversale et deux réacteurs. Un tel avion comporte donc un fuselage central 1 et deux fuselages latéraux 2, 2', écartés transversalement l'un de l'autre et centrés sur des axes longitudinaux parallèles, respectivement 10, 20, 20'. Ces trois fuselages sont reliés entre eux par trois surfaces portantes positives, respectivement avant 3, centrale 4 et arrière 5. La surface avant 3 et la surface centrale 4 sont constituées chacune de deux voilures fixes, respectivement 30, 30' et 40, 40' qui s'étendent de part et d'autre du fuselage central 1, entre ce dernier et chaque fuselage latéral 2, 2'. Cependant, les deux voilures fixes centrales 40, 40' sont prolongées au-delà des fuselages latéraux par des ailes externes 45, 45'.

L'avion comporte également une surface portante arrière 5 constituée de deux voilures fixes 50, 50' s'étendant, respectivement, entre la dérive centrale 51 et chaque dérive latérale 52, 52', cette voilure fixe arrière étant prolongée par un empennage de profondeur externe 53, 53'.

Dans certains cas, cependant, la surface portante arrière pourrait être remplacée par trois empennages de profondeur séparés fixés sur les pointes évolutives arrières, ou sur les dérives de chacun des trois fuselages.

Comme le montrent les figures 1 et 2, les bords d'attaque de chaque voilure fixe avant 3 et centrale 4 présentent une très forte flèche positive, l'angle de flèche A entre chaque bord d'attaque 31, 41 et la perpendiculaire à l'axe longitudinal 10 du fuselage central étant d'au moins 40°. De ce fait, le nez 11 du fuselage central se trouve décalé en avant des nez 21, 21' des deux fuselages latéraux, d'une distance D qui peut être du même ordre que la distance E entre les axes 20 d'un fuselage latéral 2 et 10 du fuselage central 1.

D'autre part, chaque espace libre 12 compris entre le bord de fuite 32 d'une voilure fixe avant 30 et le bord d'attaque 41 de la voilure centrale 40 qui la suit couvre une surface au plus du même ordre que la surface couverte par la voilure avant 30.

Dans l'exemple représenté sur la figure 1, chaque voilure fixe avant 30, 30' a une forme en parallélogramme, le bord d'attaque 31 et le bord de fuite 32 étant sensiblement parallèles. D'autre part, le bord d'attaque 41 de la voilure fixe centrale 40 présente un angle de flèche du même ordre ou un peu inférieur à celui du bord d'attaque 31 de la voilure fixe avant 30.

Un tel angle de flèche entraîne un allongement vers l'avant du fuselage central 1 par rapport aux fuselages latéraux et permet la réalisation d'une grande surface portante. En effet, chaque voilure fixe centrale 40 peut s'étendre, le long du fuselage central 1 sur une profondeur B au moins égale à 2,5 fois l'écartement (e) entre les flancs 13 du fuselage 1 et 23 de chaque fuselage latéral 2, 2'. Les deux voilures fixes centrales 40, 40' forment ainsi une aile en delta tronqué ayant une très grande surface portante. Celle-ci peut d'ailleurs être encore augmentée en donnant au bord de fuite 42 des voilures fixes centrales 40 un angle de flèche négatif de l'ordre de 15°.

De plus, pour augmenter encore la capacité marchande, le fuselage central 1 peut également être allongé vers l'arrière par rapport aux deux fuselages latéraux 2, 2', cet allongement étant, cependant, moins prononcé que l'allongement D à l'avant, de façon à conserver un bon équilibrage en tangage.

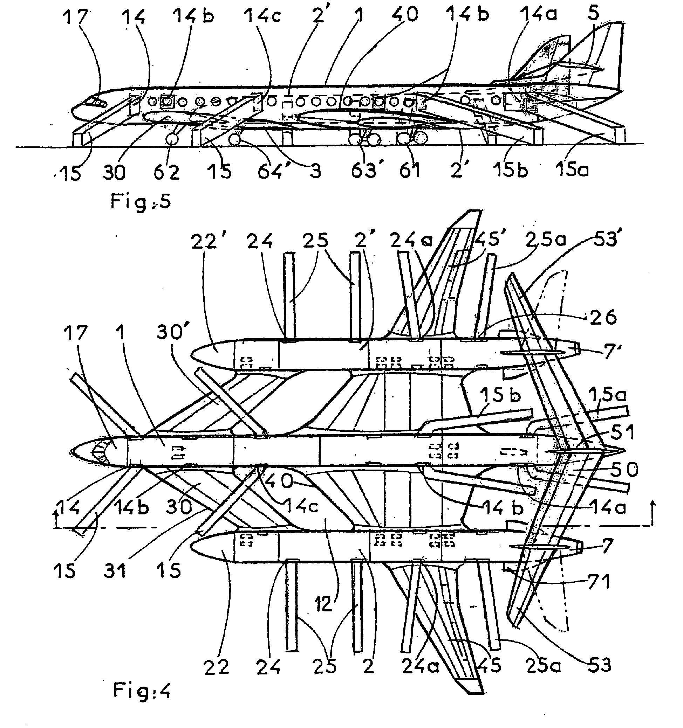

Comme le montre la figure 4, il est possible d'allonger encore le fuselage avant par rapport aux deux fuselages latéraux en augmentant la flèche positive du bord d'attaque 31 de chaque voilure fixe avant 30, celle-ci pouvant avoir une forme trapézoïdale.

Grâce à ces dispositions qui permettent de ménager de très grandes surfaces portantes entre les trois fuselages, et de bénéficier d'effets de fente, il est possible de limiter la longueur des ailes externes 45, 45' qui prolongent les voilures fixes centrales 40, 40' au-delà de chaque fuselage latéral 2, 2', de telle sorte que l'envergure totale L de l'avion ne dépasse pas le triple de la profondeur B des voilures fixes centrales 40, 40' le long du fuselage central 1.

Ainsi, on peut multiplier par trois la capacité de l'avion par rapport à un mono-fuselage de même type, tout en conservant une envergure compatible avec les aéroports convenant à cette taille d'avions.

Comme on l'a indiqué, l'empennage arrière 5 forme également une surface portante comprenant deux voilures fixes 50, 50' qui s'étendent entre la dérive centrale 51 et chaque dérive latérale 52, 52' et sont prolongées, à l'extérieur de celles-ci, par des empennages de profondeur 53, 53'.

Étant donné que le fuselage central 1 est prolongé vers l'arrière par rapport aux fuselages latéraux 2, 2', les voilures fixes arrières 50, 50' présentent une flèche négative, de préférence supérieure à celle des bords de fuite 42, 42' des voilures fixes centrales 40, 40'.

D'autre part, l'ensemble de l'empennage arrière est placé, sur les dérives 51, 52, 52', à un niveau supérieur à celui de la voilure fixe centrale 40, 40' et forment ainsi, avec celle-ci, une voilure de type rhomboïdal qui permet d'améliorer sensiblement la portance et, par conséquent, de réduire encore l'envergure L pour une même capacité de transport.

Par rapport aux voilures rhomboïdales de type connu, cette disposition présente l'avantage d'éviter la formation de couloirs d'étranglements des filets d'air, générateurs de flottements aérodynamiques sur les extrémités, les voilures n'étant pas jointives mais, au contraire, fixées rigidement, chacune sur deux fuselages.

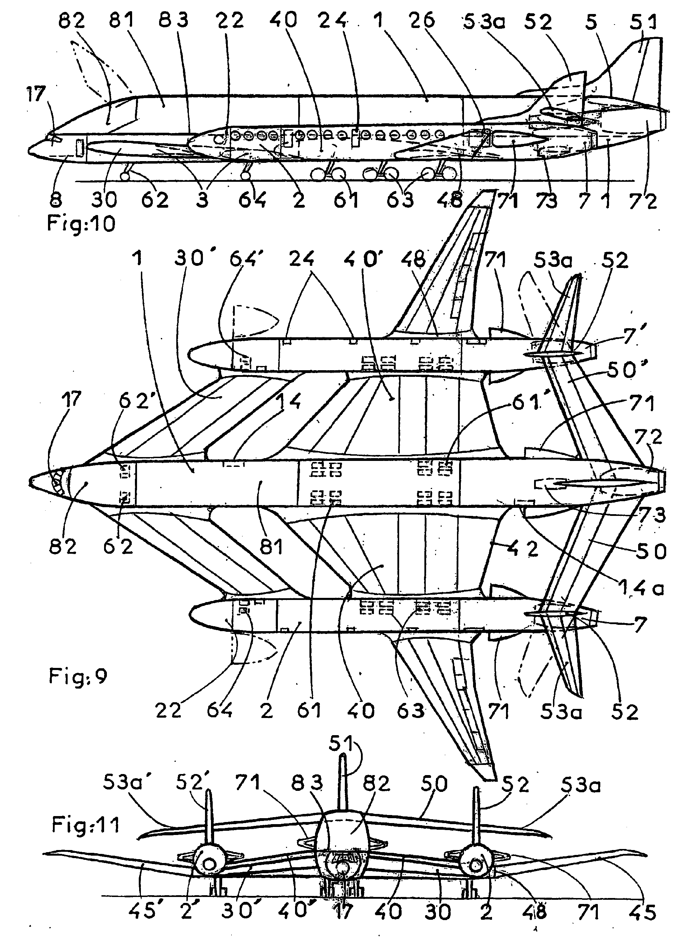

Dans le mode de réalisation représenté sur la figure 1, les empennages de profondeur externe 53, 53' ont une flèche négative, dans le prolongement des voilures fixes arrières 50, 50'. Cependant, on pourrait aussi leur donner une flèche positive, de la façon représentée en trait mixte sur les figures 1 et 4, l'empennage arrière ayant alors la forme en W indiquée sur la figure 9. Les deux dispositions permettent d'utiliser les gouvernes de profondeur comme des élevons anti-turbulences. A cet effet, on peut aussi utiliser des ailerons marginaux 46 en delta tronqué, implantés et articulés sur les extrémités des ailes externes 45, 45'.

Comme le montre la figure 3, les deux voilures fixes centrales 40, 40' présentent une face d'extrados 44 en dièdre inverse, c'est à dire légèrement inclinée vers le bas à partir du fuselage central 1 qui est légèrement surélevé par rapport aux fuselages latéraux 2, 2'. En revanche, la face d'intrados 43 est à dièdre sensiblement nul, chaque voilure fixe 40, 40' se raccordant au fuselage central 1 par un caisson structural 47 passant au-dessous dudit fuselage 1, par un carénage de raccordement. Cette disposition peut compenser l'inertie des fuselages latéraux en améliorant la maniabilité autour de l'axe de roulis.

Cependant, les voilures fixes avant 30, 30' et arrière 50, 50' sont, sur leurs deux faces, à dièdre négatif, les faces d'extrados des voilures fixes avant 30, 30' étant sensiblement parallèles aux faces d'extrados 44 des voilures fixes centrales 40, 40'.

Une telle disposition permet d'abaisser au maximum le plancher de chaque fuselage latéral pour favoriser un chargement rapide de celui-ci et d'employer des trains principaux centraux et latéraux plus courts, de hauteur identique.

L'utilisation de voilures ayant une flèche accentuée et une profondeur importante et les intervalles relativement réduits entre les trois voilures, avec des dispositifs hypersustentateurs plus efficaces, permet d'obtenir des effets de pentes très importants qui favorisent des décollages plus court à des vitesses moindres et des pentes de montée plus fortes permettant de diminuer le bruit au décollage.

Ainsi, par l'utilisation de trois fuselages séparés et grâce au resserrement longitudinal et à l'augmentation des profondeurs des surfaces portantes centrales avec amplification de leurs effets de fente, on peut réaliser des avions ayant une envergure totale L plus réduite qu'un avion mono-fuselage qui, pour une même capacité de transport, serait, en outre, pénalisé par une longueur de fuselage excessive et la répartition du chargement sur plusieurs ponts surélevés.

Par ailleurs, dans un tel type d'avion, la charge peut être répartie sur un plus grand nombre de trains d'atterrissage. Les trains d'atterrissage principaux ne s'implantent plus, comme dans un mono-fuselage, à l'intrados des ailes principales mais dans les parties ventrales des trois fuselages qui sont aménagées de façon à les loger au niveau des soutes à bagages, devant ou derrière les caissons des voilures fixes. Chacun des trois fuselages peut ainsi être équipé d'un alignement monotrace comprenant un ou deux trains principaux placés au niveau des voilures fixes centrales et un train avant.

Par exemple, dans le cas de la figure 1 qui correspond à un avion de transport de passagers, le fuselage central 1 peut être équipé d'un ou deux trains principaux 61 et d'un train avant 62 et chaque fuselage latéral porte un ou deux trains principaux 63, 63' et un train avant 64. Cependant, comme le montre la figure 1, les trains d'atterrissage principaux 63, 63' et, même, les trains avant 64, 64' sont, de préférence, décalés vers l'intérieur de façon à prendre appui à proximité des flancs internes 23, 23' de chaque fuselage latéral 2, 2'. Cette disposition permet de diminuer le rayon de giration de l'avion et d'éviter une voie trop large, l'empattement global restant compatible avec des chemins de roulement relativement étroits. Les trains principaux et avants sont implantés juste en dessous des trois charges marchandes et l'on évite ainsi le renforcement et l'alourdissement des voilures, comme dans le cas des monofuselages, lorsque les trains principaux se répartissent sur leurs intrados.

En outre, il est à noter que le développement plus court, vers l'arrière, d'un avion à trois fuselages, par rapport à un avion mono-fuselage équivalent et le fait que les réacteurs ne soient pas suspendus à l'intrados des ailes permet d'utiliser des trains d'atterrissage moins hauts et plus légers que dans le cas d'un mono-fuselage. Néanmoins avec des fûts d'atterrisseurs plus courts, il serait possible d'utiliser une très grande partie des équipements et de la cinématique des trains d'atterrissages de l'un ou de l'autre des fuselages de base.

Comme on va le voir maintenant, un tel type d'avion à trois fuselages et trois surfaces portantes de relativement faible envergure présente de multiples possibilités d'aménagement et d'utilisation pour le transport de passagers, le transport mixte ou le transport de fret.

De plus, un tel type d'avion peut, non seulement, être propulsé par un carburant classique mais aussi adapté pour l'utilisation de carburants à faible densité.

Les figures 1 à 5 montrent un type d'avion de la première famille, avec un fuselage central 1 s'étendant sur une plus grande longueur que les fuselages latéraux 2, 2' mais présentant sensiblement le même maître couple. Un tel type d'avion peut être utilisé, soit en totalité pour le transport de passagers, soit en version mixte, les passagers étant placés dans les fuselages latéraux et dans au moins une partie du fuselage central. Grâce à la présence de trois fuselages, l'avion peut être propulsé par deux réacteurs ou turbopropulseurs 7, 7' placés aux extrémités des deux fuselages latéraux 2, 2'. En revanche, le fuselage central 1 est dépourvu de réacteur, ce qui permet de réaliser l'évacuation rapide des passagers situés au milieu et à l'arrière du fuselage central, même en cas d'incendie d'un réacteur latéral.

Comme le montre la figure 4, l'accès des passagers dans les fuselages latéraux peut se faire facilement par des portes 24 placées sur leurs flancs externes et pouvant être équipées de toboggans d'évacuation 25 pour servir d'issue de secours. Une issue de secours 24a peut aussi être aménagée au-dessus de l'aile externe 45. Des toboggans 25 peuvent être déployés transversalement vers l'extérieur.

La partie arrière de chaque fuselage latéral peut aussi servir au transport de fret, chaque flanc externe étant équipé d'une porte cargo 26 dans laquelle peut être ménagée une porte passager associée à un toboggan 25a et placée avec une marge de garde devant les entrées d'air du réacteur 7.

Lorsque le fuselage central 1 est aménagé pour le transport de passagers, les sièges sont placés, de préférence, dans un compartiment avant auquel on accède par des portes 14, 14c placées devant et dans l'intervalle entre les voilures fixes avant 30 et centrale 40. Ces portes 14, 14c peuvent être associées à des toboggans d'évacuation 15 passant devant ou en biais au-dessus de la voilure fixe avant 30 avec un angle d'environ 45° vers l'avant.

Une autre porte d'accès ou, éventuellement, une porte cargo 14a peut être aménagée sur chaque flanc du fuselage central, en arrière du bord de fuite de la voilure fixe centrale 40. Cette porte peut être équipée d'un toboggan d'évacuation 15a passant en biais au-dessous de la voilure fixe arrière 50, et faisant un angle d'environ 15° avec à l'axe 10.

Le fuselage central peut également être muni d'issues de secours avants et centrales 14b, placées au-dessus des voilures fixes, respectivement avant 30 et centrale 40 et équipées de toboggans dirigés en biais, vers l'avant ou vers l'arrière, de façon à passer au-dessus desdites voilures fixes.

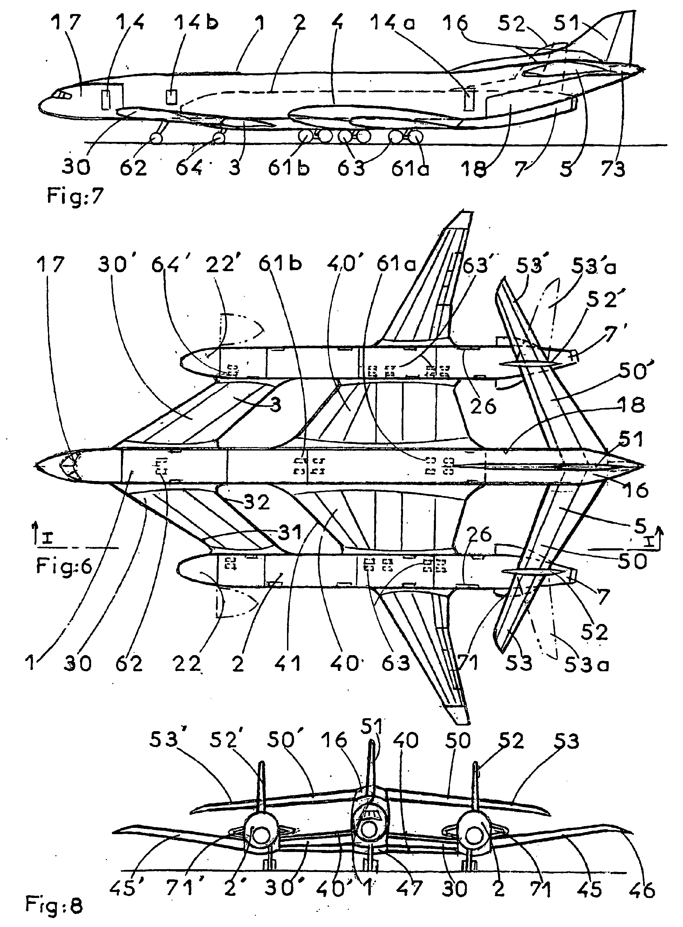

Les figures 6, 7, 8 montrent un avion de la première famille avec deux moteurs plus puissants, permettant, en particulier, d'augmenter la capacité de charge de l'avion pour une utilisation en version mixte passagers-fret, ou bien en version fret seul. Dans ce cas, les voilures fixes avant 30, 30' en dièdre inverse, ont des formes trapézoïdales plus vastes avec des flèches de bord d'attaque et des longueurs de profils plus importants que ceux des voilures 30, 30' en forme de parallélogrammes des avions de la première famille selon les figures 1 à 3. Le même processus s'applique aux empennages de profondeur arrières 50, 50' qui prennent eux aussi une forme trapézoïdale avec des flèches de bords de fuite plus accentuées.

Comme on le verra plus loin, il est avantageux, pour améliorer la sûreté, de réserver le fuselage central au transport de fret. Dans ce cas, il est préférable d'accroître la hauteur et la largeur du fuselage central 1, de la façon indiquée sur les figures 6, 7 et 8, pour augmenter le maître couple, et l'adapter par exemple, au gabarit des chemins de fer. Le fuselage central 1 peut alors être muni, dans sa pointe arrière, d'une large ouverture cargo fermée par un ou plusieurs panneaux amovibles 18 qui sont profilés de façon à reconstituer, après fermeture, la forme de la pointe arrière. Cette ouverture cargo peut être de dimensions suffisantes pour permettre, par exemple, l'introduction directe au niveau du plancher de chargement d'un conteneur au gabarit des chemins de fer. Pour faciliter cette introduction, la partie supérieure de la pointe arrière peut être munie d'un renflement 16 sur lequel sont fixées les extrémités internes des voilures fixes arrière 50, 50'.

Comme dans la version pour passagers des figures 1 à 5, la propulsion est assurée par deux réacteurs 7, 7' mais de plus forte poussée, qui sont intégrés dans les pointes arrières des deux fuselages latéraux 2, 2' et convergent vers l'extrados de l'aile centrale et vers l'axe de lacet. Ces réacteurs sont alimentés par des entrées d'air latérales 71, éventuellement dissymétriques, aménagées sur les deux flancs de chacun des fuselages latéraux.

Lorsque le fuselage central 1 est affecté au transport de fret, il est équipé, avantageusement, de deux trains principaux 61a, 61b montés au niveau des voilures fixes centrales et décalés longitudinalement de façon à se replier devant et derrière les caissons d'ailes. Les trains principaux latéraux 63, 63' sont décalés, comme précédemment, vers les flancs internes des fuselages latéraux 2, 2', de même que les trains avant 64, 64'.

Le fuselage central 1 porte, dans sa partie avant, le poste d'équipage 17 et, éventuellement, un compartiment passager.

En version mixte, les fuselages latéraux sont affectés aux passagers et sont donc pressurisés.

Cependant, dans une troisième version, les fuselages latéraux peuvent aussi être affectés au transport de fret, leur pointe avant 22 pouvant s'ouvrir de façon à former une porte cargo frontale pour le chargement de fret de grande longueur.

Les mêmes éléments peuvent être extrapolés pour réaliser un avion gros porteur de la deuxième famille, de la façon représentée sur les figures 9, 10 et 11.

Dans ce cas, un troisième turbo réacteur ou turbopropulseur 72 est installé sur la pointe arrière évolutive du fuselage central 1.

Ce fuselage central peut comporter deux ponts s'étendant sur toute sa longueur, respectivement un pont inférieur 8 et un pont supérieur 81. Les parties médianes et ventrales de la version bimoteur décrite précédemment peuvent, en effet, se transformer en pont inférieur 8 de plus grande largeur capable de recevoir, par exemple, deux conteneurs du type dit LD3. Le plancher repose directement sur les bordures inférieures internes horizontales de ces cadres. L'accès dans les deux soutes cargo du pont inférieur 8 se réalise par l'intermédiaire de deux larges portes latérales découpées sur ses flancs verticaux, l'une 14 à l'avant entre la voilure avant et les bords d'attaque 41 de l'aile principale 4, l'autre 14a juste derrière les bords de fuite 42 de celle-ci.

Le poste d'équipage 17 qui demeure dans une position similaire à celle occupée dans la version bimoteur précédente, est placé dans la pointe avant évolutive du pont inférieur, devant les emplantures des voilures avant 3, dans le prolongement du plancher 8 du pont inférieur et en dessous du niveau du pont supérieur 81. Celui-ci s'étend également sur toute la longueur du fuselage central 1 dont le maître couple peut être considérablement agrandi, de la façon représentée sur les figures 10 et 11, afin de ménager un très grand espace de chargement auquel donne accès une grande porte cargo frontale 82 s'ouvrant vers le haut.

Cet avion gros porteur à trois réacteurs peut être un long courrier, bénéficiant d'un plus grand rayon d'action grâce au vaste développement de la voilure centrale 4 dont les flèches et contre-flèches sont accentuées. Les voilures fixes centrales 40, 40' en delta tronqué s'étalent d'avantage que précédemment en profondeur et en épaisseur mais un peu moins en envergure. Leurs nervures de rives 48 peuvent être décalées au droit des flancs externes des fuselages latéraux.

Par rapport à la version bimoteur, l'écartement entre le fuselage 1 et les fuselages latéraux 2, 2' peut être augmenté en prolongeant les ailes en delta tronqué 40 de manière homothétique, par l'adjonction de deux tronçons trapézoïdaux de très grandes profondeurs et épaisseurs mais d'envergure assez courte.

Par ailleurs, les profondeurs extrapolées des emplantures des empennages avant et arrière dans le fuselage central engendrent des effets de fente et de tunnel plus intenses avec les voilures fixes centrales 40, 40', ainsi prolongées.

Ce fuselage central 1 à deux ponts 8, 81 est sensiblement allongé vers l'avant et un peu moins vers l'arrière.

La partie la plus robuste du fuselage central 1 est formée à l'aide du plancher du pont supérieur renforcé 81, soutenu et étayé par les caissons des ailes en delta tronqué 40, 40' ou des empennages avant 30, 30' et par la structure davantage pressurisée du pont inférieur 8. Celle-ci est pourvue de revêtements et de cadres plus épais et plus résistants que la cellule assez mince au-dessus de ce plancher.

Pour certaines versions, les maîtres couples peuvent être agrandis par adjonction de panneaux de revêtements au milieu des flancs ou parties ventrales et dorsales galbées des ponts inférieur 8 et supérieur 81, les pointes évolutives avant et arrière étant un peu plus longues. Ces versions spécifiques peuvent être adaptées aux besoins particuliers des militaires ou de quelques transporteurs spécialisés dans le fret de grandes dimensions.

Comme le montre la figure 11, les revêtements du fuselage central verticaux (flancs) et horizontaux (dos et ventre), peuvent être légèrement galbés selon un profil elliptique très plat. Cette configuration augmente progressivement la largeur de leurs cadres et longerons vers le milieu de chacun d'eux.

II en résulte moins de flottements ou de vibrations aéroélastiques et une forme aérodynamique plus efficace et plus stable dans les dérapages engendrés par la turbulence et les pannes moteurs. En attaque oblique et dans les remous, cette forme de carlingue génère moins de traînées et de tourbillons déstabilisateurs qu'un fuselage central cargo de section rectangulaire. D'autre part, cette section galbée s'adapte mieux à une faible pressurisation, par exemple de 2 à 4 psi. En effet, lorsqu'il est utilisé pour le transport de fret, le fuselage central 1 peut être peu pressurisé sauf dans le poste d'équipage 17. II peut donc être allégé, ce qui constitue une solution économique en poids et en coût de fabrication.

Compte tenu de la charge importante d'un tel type d'avion, de la deuxième famille, le fuselage central 1 qui possède un plus vaste maître couple, peut être équipé de deux trains avant 62, 62' et de quatre trains d'atterrissage principaux 61, 61' implantés en deux couples monotraces à proximité des flancs verticaux du fuselage central, devant et derrière le caisson des voilures fixes 40, 40' en delta tronqué qui le traversent. Entre les logements latéraux des roues, on dispose d'un espace central libre pour un conteneur de fret.

II en résulte, sur la piste, une répartition des charges statiques et dynamiques à peu près proportionnelle à la distribution en vol des portances des voilures et des masses du chargement. Grâce à cette implantation des trains d'atterrissages sous les fuselages, on évite des renforcements très lourds des voilures. La présence de quatre trains avants orientables 62, 62', 64, 64' disposés en triangle, procure une excellente stabilité directionnelle sur pistes à faibles adhérences et confère une bonne maniabilité dans les virages à courts rayons de braquage.

D'autre part, un groupe auxiliaire de puissance 73 dit A.P.U. peut être installé avec des équipements hydrauliques, électriques et de conditionnement d'air pour l'ensemble des trois fuselages, soit entre deux logements de trains principaux soit, de préférence, juste devant le réacteur central, dans la partie évolutive ventrale qui le précède.

Les soutes cargo du pont inférieur ont une hauteur au moins égale à l'épaisseur maximale des caissons des ailes 40 en delta tronqué et s'étendent entre les deux logements des trains principaux et le réacteur à l'arrière, ou le poste d'équipage à l'avant. Leurs structures plus épaisses soutenues par une ossature plus robuste, qui étaye le plancher du pont supérieur, supporte un taux de pressurisation plus élevé, par exemple 4 psi, que celui du pont supérieur qui peut être de 2 psi. La soute avant peut bénéficier du conditionnement d'air du poste d'équipage à travers les vannes de régulation de pressurisation établies sur sa cloison arrière et peut servir au transport d'animaux vivants et/ou de fret affecté par les grands écarts de températures et de pressions atmosphériques.

Par ailleurs, depuis quelques temps, on envisage d'utiliser, pour la propulsion, des carburants à faible densité tels que hydrogène liquéfié, méthane, etc... En pratique, cependant, l'utilisation de tels carburants n'a pu se développer sur les avions monofuselages classiques pour des raisons de sécurité et de mode de mise en oeuvre.

II est apparu, en revanche, qu'un avion à trois fuselages était particulièrement adapté à une telle application, à condition de disposer d'un fuselage central beaucoup plus volumineux que les fuselages latéraux.

C'est le cas, en particulier, du mode de réalisation des figures 9, 10, 11 dans lequel, selon une autre caractéristique avantageuse, le très grand volume de chargement disponible permet d'utiliser, pour la propulsion, un carburant à faible densité, cette architecture permettant, d'autre part, de multiples possibilités de transformations rapides et à peu de frais.

Par exemple, les parties évolutives avant et arrière du pont supérieur 81 du fuselage central 1 peuvent recevoir deux réservoirs d'un tel carburant, avec une isolation thermique sur toute leur périphérie. Ces réservoirs, constitués par des conteneurs amovibles, peuvent être prolongés plus ou moins vers le centre de l'avion pour obtenir des rayons d'action plus ou moins grand. Le fret peut être arrimé entre ces deux zones avant et arrière dans les grands volumes du pont supérieur 81 à maître-couple maximal.

Le fret peut être placé dans des conteneurs qui peuvent être remplacés par des réservoirs de carburant à faible densité pour une application moyen ou long-courrier.

Tous les conteneurs de fret et de carburant se chargent, comme des palettes standards, par la porte cargo frontale 82 située au-dessus du poste d'équipage 17.

II est à noter, par ailleurs, que l'épaisseur et la profondeur importantes de l'aile centrale 40, 40' en delta tronqué, permettent d'y aménager des réservoirs pour une partie importante du carburant cryogénique, avec un bon rendement pour son isolation calorifique.

Ces réservoirs de carburant à faible densité (hydrogène ou méthane) isolés et calorifugés, disposent de systèmes de branchement de leurs circuits internes d'alimentation sur ceux du bord.

Dans une autre variante, un carburant à faible densité peut être contenu dans un réservoir fixe intégré dans la partie arrière du fuselage central 1 sur toute la hauteur des ponts. De même, sur le pont supérieur 81, la pointe évolutive avant et sa porte cargo frontale 82 peuvent être remplacées par la partie avant d'un conteneur-réservoir amovible ayant la forme évolutive et la résistance structurale nécessaires. Celui-ci s'arrime sur le plancher avant du pont supérieur et sur la section verticale avant de sa carlingue tranchée au droit d'un couple fort. II en découle un allégement et une simplification de l'aménagement frontal et des escales intermédiaires rapides.

Dans encore une autre variante le conteneur-réservoir avant est supprimé. II se remplace par une prolongation amovible du réservoir fixe arrière, accolée contre celui-ci et arrimée dans la partie arrière du pont supérieur 81. Les variations de centrage, du décollage à la croisière, résultant du remplissage plus ou moins complet et du délestage en vol de ces réservoirs fixes et amovibles arrières, peuvent être compensées par le poids des réserves d'attente et de dégagement, en kérosène trois fois plus lourd, pouvant être stockées dans des réservoirs de structure aménagés dans les caissons des voilures avant 30, 30'. Vers la fin de la croisière lorsque le carburant à faible densité du réservoir fixe arrière est délesté, un centrage trop avant peut être compensé par le transfert du kérosène des voilures avant 30, 30' dans les réservoirs vides des voilures centrales 40, 40'.

Les deux circuits de carburants, en hydrogène et kérosène et l'architecture à trois surfaces portantes avec des vastes empennages avant et arrière permettent des escales assez courtes avec des manutentions moins complexes des conteneurs de carburant et de fret, ce qui améliore nettement la vitesse commerciale.

Le fuselage central à deux ponts long et large et les fuselages latéraux plus courts et plus étroits permettent des répartitions des charges au centre et aux extrémités des voilures centrales proportionnelles aux différentes profondeurs et surfaces des secteurs de voilures concernées par chaque fuselage. II en est de même pour la répartition des charges statiques et dynamiques sur la piste d'atterrissage, avec quatre alignement de deux trains principaux implantés en tandem devant et derrière les différentes profondeurs accrues du caisson des voilures centrales 40, 40' et en raison de l'avancée des trains avants établis à l'intrados des voilures avant 30, 30'. De telles répartitions et les gains en allégements de structure sont permises par un choix judicieux des flèches accentuées pour les trois voilures.

Cet aménagement mixte fret/passagers avec un poste d'équipage central au niveau du pont inférieur et, éventuellement, la poussée d'appoint d'un groupe auxiliaire de puissance A.P.U. donnent la possibilité de transporter des charges lourdes et encombrantes sans nuire au confort des passagers, tout en bénéficiant d'une manutention rapide dans toutes les escales avec des conditions de sûreté très efficaces.

A cet égard, il est apparu qu'un tel type d'avion à trois fuselages permettait d'améliorer la sûreté et la sécurité du transport aérien par la mise en oeuvre de modalités originales d'embarquement et de répartition des passagers, des bagages et, éventuellement du fret.

Dans la version tout passagers telle que représentée sur la figure 5, la compagnie aérienne peut sélectionner les passagers les plus sûrs ou les plus visés par les attentats afin de les placer dans le fuselage central où se trouve l'équipage technique.

Les fuselages latéraux, sans poste d'équipage, reçoivent les passagers en transit d'escales douteuses ou ceux dont la nationalité ou les renseignements obtenus laissent craindre la présence de personnes potentiellement dangereuses.

Les bagages sont disposés dans les soutes sous-adjacentes aux passagers sélectionnés selon le processus ci dessus, afin d'éviter de placer une valise avec une bombe en dessous d'une cabine où se trouvent des passagers spécialement visés par les attentats. II n'y a aucune trappe dans les planchers cabine pour accéder aux soutes à bagages ou cargo.

Grâce à la répartition des passagers en trois fuselages, l'embarquement après la fouille, s'effectue à partir de deux ou trois salles d'attente étanches, différentes, à l'aide d'autobus ou de passerelles d'accès distinctes les unes des autres, afin d'éviter que des armes puissent passer d'un groupe à l'autre.

Cette procédure permet d'isoler au moins le tiers des passagers dans presque toutes les circonstances, ainsi que l'équipage technique, grâce au blindage et au verrouillage de la porte du poste. Si un détournement se produit, il y a de grandes probabilités pour que les pirates restent confinés dans l'un des fuselages latéraux par suite de l'application permanente des regroupements systématiques. Dans ce cas, il devient plus aisé de libérer au moins le tiers des voyageurs et de changer d'équipage technique, voire même de débarquer celui-ci après avoir saboté la mise en route des réacteurs.

II est aussi possible d'installer dans les trois cabines des caméras de télévision et des microphones, permettant aux pilotes et à l'équipage commercial de déceler et suivre une tentative de détournement. Les pilotes déclenchent alors la dépressurisation de la cabine attaquée, pendant que les hôtesses et stewards utilisent leur masque d'oxygène, et que les autres cabines bénéficient d'un conditionnement d'air normal. L'équipage qui reste maître de ses décisions et manoeuvres entreprend une descente d'urgence vers l'aérodrome de secours le plus proche, de préférence militaire, où il sera plus facile d'organiser la libération des otages.

Dans le cas où le fuselage central est réservé au transport de fret, il est plus facile de contrôler l'absence de passagers clandestins dans les conteneurs. De plus, la porte blindé du poste d'équipage demeure verrouillée pendant tout le vol. Ces précautions préservent les pilotes de tout acte de détournement. En version mixte fret/passagers dans les fuselages latéraux, la porte blindée de communication avec la soute de fret est également verrouillée.

Une autre solution pour empêcher les irruptions dans le poste d'équipage, consiste à employer le fuselage central comme réservoir de carburant cryogénique, en éliminant toute soute de fret entre ce poste et le réservoir.

Par ailleurs, un tel avion trifuselage à trois surfaces portantes positives est capable de mieux résister à une explosion locale qu'un mono-fuselage ne disposant que d'une seule ligne de résistance et dans lequel la destruction par explosion d'une partie de son fuselage unique peut provoquer la rupture immédiate de celui-ci.

Au contraire, la configuration en quadruple trapèze d'un avions à trois fuselages avec des voilures réparties au centre et à chaque extrémité avant et arrière engendre un double étayage, l'un dans le plan horizontal aux jonctions latérales des fuselages, l'autre dans le plan vertical par le décalage en hauteur des surfaces portantes, ainsi que des éloignements importants des empennages avant et arrière vis-à-vis des compartiments à bagages. Ainsi, l'explosion d'une valise dans une soute ne provoque pas obligatoirement la rupture d'une carlingue en deux parties, surtout si l'on utilise une ossature multilongerons. Il restera toujours des éléments de structures assez résistants tels que lisses et longerons remplis de nids d'abeilles, qui éviteront une coupure complète. Ils maintiendront l'essentiel de l'ossature, même si une grande partie du revêtement est arrachée. La robustesse des deux autres fuselages et les jonctions transversales empêcheront cette cassure. Même des explosions dans les deux fuselages latéraux, mais l'une à l'avant de l'aile et l'autre à l'arrière n'entraîneraient pas la destruction de l'avion. En réduisant la vitesse et l'altitude et en effectuant des virages à faibles inclinaisons, les pilotes pourraient rejoindre un terrain de secours pour y effectuer un atterrissage d'urgence. Un avion à trois fuselages bénéficie donc de meilleures probabilités pour échapper à un attentat, surtout si les chargements dans les escales évitent de placer toujours dans la même soute, tel type de colis, ou de grouper toujours aux mêmes emplacements, les envois destinés à des escales spécifiques. Les triples liaisons centrales entre les trois fuselages, constituent une supériorité importante sur les avions classiques ou bifuselages.

Un autre avantage réside dans le fait que l'on dispose de deux groupes de deux gouvernes de profondeur distinctes, l'une à l'avant, l'autre à l'arrière, de trois gouvernes de direction, et de trois ensembles diversifiés agissant autour de l'axe de roulis, les ailerons marginaux et les volets de courbures/ailerons sur les ailes externes, avec en plus des gouvernes de profondeurs monoblocs manoeuvrables comme des élevons. Chacune de ces commandes fonctionne à l'aide de circuits électriques ou hydrauliques, qui s'établissent dans des fuselages différents. Ils peuvent être isolés les uns des autres en cas de courts circuits, de chute de pression ou de blocage de gouvernes. La mise hors service d'un groupe de celles-ci peut être compensée par un braquage plus fort de l'autre groupe avant que l'avion gravement endommagé ne s'engage dans des positions difficiles à contrôler.

De plus, les différents équipements hydrauliques, électriques (réseau général), électroniques (navigation, communications), centrale aérodynamique etc., se répartissent dans les trois fuselages, afin de diviser les risques et aussi de faciliter l'entretien en escale. Leur répartition sur les nombreuses parties ventrales latérales du trifuselage, procure des accès espacés pour chacun d'eux et évite la gêne mutuelle entre les différents services participant à la mise-en-oeuvre de l'avion. Il en résulte des escales plus courtes et une surveillance plus facile, donc une sûreté accrue.

Pour les versions mixtes avec du fret entreposé dans le fuselage central, l'explosion d'une bombe dans celui-ci n'entraînerait qu'une dépressurisation limitée, du fait que le fuselage central, servant au transport de fret, est pourvu d'un taux de pressurisation maximal de 2 à 4psi. L'équipage protégé par une cloison blindée et dans un poste pressurisé à part, respirera normalement ou, au pire, utilisera les masques à oxygène. Dans les fuselages latéraux, les passagers ne seront pas incommodés. L'avion ne sera pas contraint à une descente rapide, il continuera de voler à une altitude suffisamment élevée pour rejoindre en sécurité un aéroport de secours.

Ainsi, un avion à trois fuselages selon l'invention permet la mise en place de mesures de prévention plus efficaces et offre en outre, une grande résistance aux destructions de toutes sortes, des formes plus compactes et des rendements aérodynamiques propulsif et structuraux supérieurs.

II est à noter, en outre, que l'accentuation des flèches des voilures et l'efficacité permanente des effets de fentes, avec les dispositifs hypersustentateurs rentrés, permettraient d'atteindre des vitesses de croisière plus grandes et des niveaux de vol plus élevés, au-dessus des niveaux actuels saturés par la forte densité du trafic.

De tels aéronefs composites, à soutes nettement séparées et spécialisées avec de grandes capacités, convenant pour diverses charges marchandes, procurent une rentabilité et une sécurité que l'on ne pouvait atteindre avec une architecture classique monofuselage, en particulier avec deux ou trois ponts très surélevés au-dessus de la piste, qui s'adapte difficilement aux infrastructures aéroportuaires actuelles.

De plus, le vaste volume disponible autorise le montage de moteurs de types variées dans des pointes évolutives arrières qui forment des carénages externes insonorisés.

Mais l'invention ne se limite évidemment pas aux seuls modes de réalisation et aux aménagement qui viennent d'être décrits, d'autres variantes et d'autres dispositions pouvant être imaginées en restant dans le cadre de protection de l'invention.

Par exemple, on pourrait encore augmenter les flèches et les profondeurs de voilures, et la répartition des surfaces portantes afin d'augmenter la capacité de chargement du fuselage central.

En outre, on a vu qu'un même type d'avion peut être adapté à diverses utilisations en faisant varier les dimensions du fuselage central par rapport aux fuselages latéraux, la profondeur et les flèches des voilures fixes entre les fuselages et, bien entendu, les aménagements intérieurs.

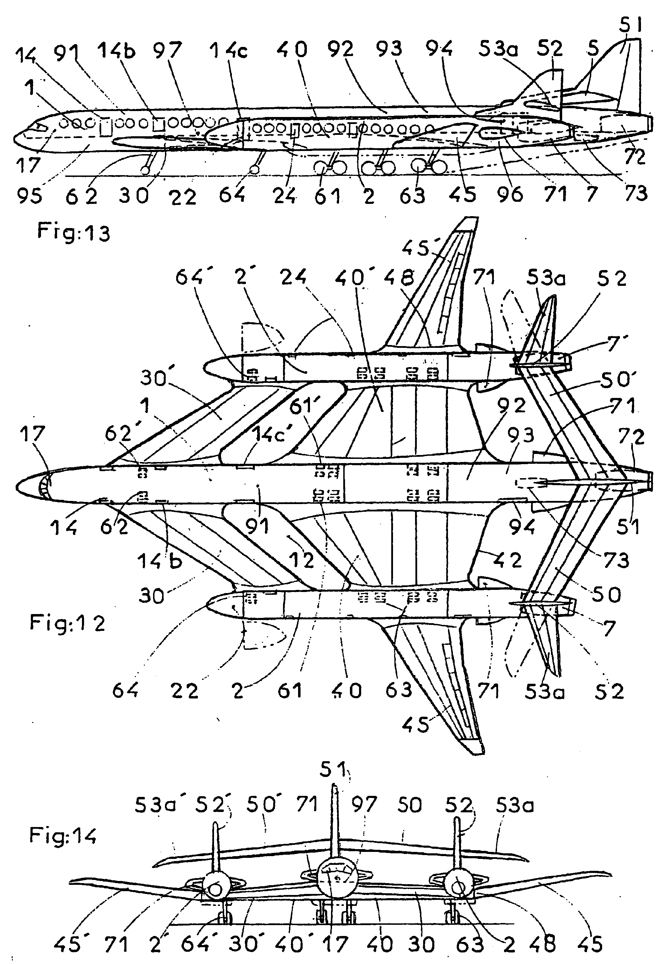

C'est ainsi que les mesures de sûreté et de sécurité qui viennent d'être décrites trouvent une application optimale sur un avion gros porteur long-courrier à trois moteurs, tel que représenté sur les figures 12, 13, 14.

Un tel avion est du type décrit plus haut comportant un fuselage central plus gros que les fuselages latéraux.

Cependant, le fuselage central est prévu essentiellement pour le transport de passagers. De ce fait, le fuselage central cargo, haut et large, peu pressurisé et allégé des figures 9, 10, 11 est remplacé par un fuselage central (1) circulaire ou bilobé ayant un maître couple plus grand que celui des fuselages latéraux (2, 2'), de façon à comporter au moins un à deux sièges de plus par rangée de fauteuils.

En compensation de sa plus faible hauteur par rapport à la version des figures 9, 10, 11, le fuselage central 1 peut avoir une plus grande longueur et être muni, à l'avant de portes passagers (14, 14b, 14c) et à l'arrière d'une porte latérale cargo 94 d'accès plus facile.

En effet, du fait que, comme dans la version précédente, l'avion est équipé d'un troisième réacteur ou turbopropulseur 72 monté à la pointe arrière évolutive du fuselage central 1, seule la partie avant 91 de celui-ci, s'étendant sur environ la moitié de sa longueur, est prévue pour le transport de passagers afin de permettre leur évacuation rapide vers l'avant en cas d'incendie du réacteur central 72 ou de l'un des réacteurs latéraux 7, 7'. Cette partie avant 91 est donc seule pressurisée à 8 PSI alors que la partie arrière 92, qui présente sensiblement le même maître-couple, est peu ou pas pressurisée et peut être allégée, cette partie arrière 92 pouvant contenir soit une soute de fret 93, desservie par une porte cargo arrière 94, soit des réservoirs de carburants à faible densité.

En propulsion par du kérosène, ce fuselage central 1 englobe deux soutes à bagages inférieures 95, 96 et un seul pont 97 au plancher sur lequel s'établissent le poste d'équipage 17 la cabine passagers avant 91 et la soute de fret arrière 93 éventuellement séparée de la partie avant 91 par une cloison de pressurisation.

En propulsion par des carburants à faible densité, le pont ou plancher unique 97, ne dépasse pas la cloison arrière pressurisée de la cabine passagers 91, et des réservoirs calorifuges peuvent être établis sur toute la hauteur et la largeur du fuselage central 1, qui ne comporte pas de soute à bagages en dessous de ces réservoirs. Eventuellement, surtout pour la propulsion à l'aide de méthane liquide réfrigéré, les épais caissons trapézoïdaux des ailes centrales en delta tronqué 40, 40', peuvent être transformés en réservoirs calorifuges pour carburants à faible densité afin d'accroître le rayon d'action. Cette récupération de capacité carburant permet l'aménagement éventuel d'un compartiment extrême arrière pour le fret et les bagages qui s'installe juste avant la cloison pare-feu du moteur central arrière 72 et autour de ses conduits internes d'entrées d'air 71.

Cette nouvelle disposition des réservoirs de carburants à faible densité occupe des emplacements difficiles d'accès dans le fuselage central, au-dessus des ailes centrales 40, 40' et des intervalles 12, 12' entre celle-ci et l'empennage avant 30, 30', facilite l'embarquement rapide de palettes ou de conteneurs de fret et favorise un meilleur centrage. La transformation de structure est la plus simple et la plus légère possible.

D'autre part, ce fuselage central 1 cylindrique ou bilobé, moins haut que celui presque rectangulaire, réservé au fret, des figures 9, 10 et 11, permet l'encastrement des empennages de profondeurs arrières 50, 50', vers les tranches basses de la dérive 51, en restant bien au-dessus de la partie dorsale du carénage moteur 72. Il en découle des marges qui réduisent les interactions aérodynamiques et évitent des heurts de conteneurs de fret sur ces empennages 50,50' pendant leurs chargements en escales.

II apparaît donc qu'un tel type d'avion à trois fuselages reliés par des voilures à flèche accentuée permet de réaliser de multiples versions, comportant deux ou trois moteurs, à partir d'un ou deux fuselages de base correspondant chacun à une certaine catégorie d'aéroport.

En effet, comme on l'a indiqué plus haut, les aéroports sont classés en différentes catégories et, pour chacune d'elles, il est possible de définir les caractéristiques d'un fuselage de base à partir duquel sont réalisés les fuselages latéraux de l'avion, le fuselage central pouvant avoir le même maître-couple avec une plus grande longueur, comme dans les versions des figures 1 à 5, ou bien un maître couple supérieur. Dans ce cas, le fuselage central d'une catégorie pourra être constitué à partir du fuselage de base de la catégorie immédiatement supérieure, en particulier pour le transport de passagers, comme dans le cas des figures 12, 13, 14.

Mais le fuselage central peut aussi être surélevé, comme dans le cas de la figure 7, pour le transport de conteneurs, ou même comporter deux ponts, comme dans le cas des figures 9, 10, 11, pour la version gros-porteur et long courrier.

Dans ce cas, l'écartement entre le fuselage central et les fuselages latéraux peut être augmenté en prolongeant les ailes en delta tronqué de la version précédente, de manière homothétique, par l'adjonction de deux tronçons trapézoïdaux de grande profondeur et épaisseur mais d'envergure assez courte, les bords d'attaque et de fuite rectilignes étant simplement prolongés. On peut ainsi utiliser tous les éléments de structure et d'équipement de la version de plus faible capacité.

Il est à noter que le supplément de surface des voilures centrales 40, 40' procure un vaste volume complémentaire pour les réservoirs de carburant et peut être obtenu avec un accroissement modéré de l'envergure grâce aux flèches accentuées des bords d'attaque et de fuite.

De même, les voilures fixes avant 30, 30' et arrière 50, 50' qui ont, de préférence, une configuration trapézoïdale peuvent être extrapolées de manière homothétique à partir des éléments de la version bimoteur. II en résulte une augmentation appréciable de leurs surfaces alaires qui s'ajoute à celles des ailes centrales 40, 40', ce qui permet de ne pas augmenter exagérément l'écartement E entre les axes 10 du fuselage central et 20, 20' des fuselages latéraux.

On a ainsi réalisé un nouveau type d'avion ayant une très grande capacité de transport et dont la voie des trains principaux et l'envergure de l'aile principale restent, cependant, dans des limites compatibles avec les normes des aéroports ce qui facilite l'insertion de ce type d'avion entre les jetées d'embarquement d'une aérogare prévue initialement pour des avions monofuselages ayant des capacités marchandes notablement inférieures.

Pour chaque catégorie d'aéroports, les différentes versions possibles se classent en au moins deux familles, respectivement à deux moteurs ou trois moteurs et permettent des utilisations très variées.

Ainsi, à partir d'un ou deux fuselages de base correspondant à un ou deux types d'avions, par exemple avion d'affaire ou régional, moyen courrier ou long courrier, il sera possible de définir au moins deux familles d'avions respectivement à deux ou trois moteurs, comportant chacune plusieurs versions correspondant à diverses utilisations. De tels avions auront, dans tous les cas, une capacité de transport au moins triple de celle du fuselage de base et pourront, cependant, être accueillis dans les mêmes aéroports, sans modification notable des installations.

Les signes de référence insérés après les caractéristiques techniques mentionnées dans les revendications, ont pour seul but de faciliter la compréhension de ces dernières et n'en limitent aucunement la portée.

## Revendications

1. Procédé d'amélioration des conditions de sûreté dans le transport aérien, selon lequel on réalise des avions comportant trois fuselages écartés transversalement, avec chacun une dérive, respectivement un fuselage central (1) et deux fuselages latéraux (2, 2'), et au moins deux surfaces portantes écartées longitudinalement, respectivement une surface avant (3) et une surface centrale (4) constituées chacune de deux voilures fixes s'étendant entre chaque fuselage latéral (2, 2') et le côté correspondant du fuselage central (1), avec un bord d'attaque à fléche positive accentuée, chaque voilure fixe centrale (40, 40') étant prolongée de l'autre côté du fuselage latéral (2, 2'), par une aile externe (45, 45'), le poste de pilotage (17) étant placé à l'avant du fuselage central (1) et le fret et les passagers étant répartis entre les trois fuselages en fonction des conditions de contrôle, **caractérisé par le fait que** le poste de pilotage est placé dans un compartiment blindé et pressurisé individuellement, et que l'on place les passagers les plus sûrs ou éventuellement menacés dans lé fuselage central (1) et les passagers douteux dans les fuselages latéraux (2, 2'), l'accès des passagers dans leurs compartiments respectifs se faisant par des moyens distincts.

2. Procédé d'amélioration de la sûreté selon la revendication 1, **caractérisé par le fait que** chaque fuselage (1, 2, 2') est muni de moyens de pressurisation distincts commandés individuellement à partir du poste de pilotage (17).

3. Procédé d'amélioration de la sûreté selon l'une des revendications 1 et 2, **caractérisé par le fait que** le fuselage central (1) est partiellement réservé au fret et des passagers sont répartis dans les deux fuselages latéraux (2, 2').

4. Procédé d'amélioration de la sûreté selon l'une des revendications 1 à 3, **caractérisé par le fait que** l'on dispose de deux groupes de gouvernes de profondeur, respectivement sur des voilures fixes avant (30, 30') et sur des voilures fixes arrières (50, 50') de chaque avion, de trois gouvernes de direction, respectivement sur les dérives (51, 52, 52') des trois fuselages (1, 2, 2'), de deux empennages de profondeur externes (53, 53') fonctionnant comme des élevons à l'arrière de chaque fuselage latéral (2, 2') ainsi que des organes d'amélioration de la maniabilité en roulis, et que ces gouvernes sont commandées à partir du poste de pilotage (17) au moyen de circuits hydrauliques et électriques distincts.

## Claims

1. A Method for improving air travel safety, according to which aircrafts are provided which comprise three fuselages, spaced apart transversally from one another, each having a rear vertical stabilizer, respectively a central fuselage (1) and two lateral fuselages (2, 2'), and at least two airfoil surfaces spaced apart longitudinally, respectively a front surface (3) and a central surface (4) each formed of two fixed wings extending between each lateral fuselage (2, 2') and the corresponding side of the central fuselage (1) with a leading edge exhibiting a high positive sweep,
each central fixed wing (40, 40') being prolonged on the other side of the lateral fuselage (2, 2') by an external wing (45, 45'),
the cockpit (17) being located in a forward portion of the central fuselage (1) and
the cargo and passengers being distributed in the three fuselages according to applicable control measures,
**characterized by** the fact that
the cockpit is located in a separately armoured and pressurized compartment, and that the passengers which are a low security risk or possibly whose security could be threatened are located in the central fuselage (1) and the passengers which are a high security risk are located in the lateral fuselages (2, 2'), the passengers accessing in their respective compartments by separate means.

2. The method for improving safety according to claim 1, **characterized by** the fact that each fuselage (1, 2, 2') is equipped with separated pressurization means individually controlled from the cockpit (17).

3. The method for improving safety according to claim 1 or 2, **characterized by** the fact that the central fuselage (1) is partly reserved for cargo, and passengers are distributed in the two lateral fuselages (2, 2').

4. The method for improving safety according to any one of claims 1-3, **characterized by** the fact that two groups of elevator controls are respectively available on front fixed wings (30, 30') and rear fixed wings (50, 50') of each plane, three rudders are available respectively on the rear vertical stabilizers (51, 52, 52') of the three fuselages (1, 2, 2'), two external horizontal tail units (53, 53') functioning as elevons at the rear of each lateral fuselage (2, 2') and members for improving control around the roll axis are available, and these control surfaces are controlled from the cockpit (17) by distinct hydraulic and electrical circuits.

## Patentansprüche

1. Verfahren zur Verbesserung der Sicherheitsbedingungen im Luftverkehr, nach dem Flugzeuge verwirklicht werden, die drei transversal auseinanderstehende Rümpfe mit jeweils einem Seitenleitwerk umfassen, jeweils einen zentralen Rumpf (1) und zwei seitliche Rümpfe (2, 2'), und wenigstens zwei longitudinal auseinanderstehende Tragflächen, jeweils eine vordere Fläche (3) und eine zentrale Fläche (4), jede bestehend aus zwei festen Tragflügeln, welche sich zwischen jedem seitlichen Rumpf (2, 2') und der entsprechenden Seite des zentralen Rumpfs (1) erstrecken, mit einer Vorderkante mit positivem Pfeilwinkel, wobei jeder zentrale feste Tragflügel (40, 40') auf der anderen Seite des seitlichen Rumpfes (2, 2') durch einen äußeren Flügel (45, 45') verlängert ist, wobei die Flugkanzel (17) vorne an dem zentralen Rumpf (1) untergebracht ist und die Fracht und die Passagiere zwischen den drei Rümpfen in Abhängigkeit von Kontrollbedingungen aufgeteilt werden,
**dadurch gekennzeichnet, dass** die Flugkanzel in einem gesondert druckausgleichenden und abgeschirmten Abteil angebracht ist, und dass die sichersten oder möglicherweise bedrohten Passagiere im zentralen Rumpf (1) und die zweifelhaften Passagiere in den seitlichen Rümpfen (2, 2') untergebracht werden, wobei der Zugang der Passagiere zu ihren jeweiligen Abteilen durch unterschiedliche Mittel erfolgt.

2. Verfahren zur Verbesserung der Sicherheit nach Anspruch 1,
**dadurch gekennzeichnet, dass** jeder Rumpf (1,2,2') mit unterschiedlichen Druckausgleichsmitteln ausgestattet ist, die einzeln von der Flugkanzel (17) aus gesteuert werden.

3. Verfahren zur Verbesserung der Sicherheit nach einem der Ansprüche 1 und 2,
**dadurch gekennzeichnet, dass** der zentrale Rumpf (1) teilweise für Fracht reserviert ist und die Passagiere auf die zwei seitlichen Rümpfe (2, 2') aufgeteilt werden.

4. Verfahren zur Verbesserung der Sicherheit nach einem der Ansprüche 1 bis 3,
**dadurch gekennzeichnet, dass** es zwei Gruppen von Höhenrudern gibt, jeweils auf vorderen festen Tragflügeln (30, 30') und auf hinteren festen Tragflügeln (50, 50') jedes Flugzeugs, drei Seitenruder, jeweils auf den Seitenleitwerken (51, 52, 52') der drei Rümpfe (1, 2, 2'), zwei äußere Höhenleitwerke (53, 53'), die als Elevons hinten an jedem seitlichen Rumpf (2, 2') wirken, sowie Einrichtungen zur Verbesserung der Handhabbarkeit beim Schlingern, und dass die Ruder von der Flugkanzel (17) aus vermittels unterschiedlicher hydraulischer und elektrischer Schaltkreise gesteuert werden.
